# FASCICULE DE BREVET EUROPEEN

(11) **EP 1 248 708 B1**
(45) Date de publication et mention de la délivrance du brevet: **12.11.2003**
(21) Numéro de dépôt: 01903928.8
(22) Date de dépôt: 11.01.2001
(51) Int. Cl.: B60B 29/00

(54) **CHARIOT DE MANUTENTION, DU TYPE PERMETTANT DE LEVER ET SUPPORTER AU MOINS UNE ROUE D'UN VEHICULE**
FLURFÖRDERZEUG ZUM HEBEN UND TRANSPORTIEREN VON MINDESTENS EINEM FAHRZEUGRAD
INDUSTRIAL TRUCK FOR LIFTING AND SUPPORTING AT LEAST A VEHICLE WHEEL

(30) Priorité: 17.01.2000 FR 0000552
(43) Date de publication de la demande: 16.10.2002
(73) Titulaire: Tortellier, Christian, 35530 Servon sur Vilaine (FR)
(72) Inventeur: Tortellier, Christian, 35530 Servon sur Vilaine (FR)
(74) Mandataire: Vidon, Patrice
(86) Numéro de dépôt international: FR0100092
(87) Numéro de publication internationale: WO01053118

(56) Documents cités:
- EP-A- 0 317 044
- FR-A- 2 769 909
- US-A- 3 145 859
- US-A- 5 505 578
- US-A- 5 732 960

## Description

Le domaine de l'invention est celui de la manutention des véhicules montés sur roues, tels que notamment mais non exclusivement les automobiles.

Typiquement, la manutention consiste à déplacer un véhicule à l'intérieur ou à proximité d'un garage, d'un atelier (carrosserie, mécanique, ...), d'un hall d'exposition, d'un parking, etc. Généralement, il est impossible de faire rouler le véhicule sur ses propres roues, du fait qu'il est accidenté ou en panne, ou encore parce qu'il est fermé avec le frein à main ou la direction bloquée (ou une vitesse engagée).

Plus précisément, l'invention concerne un chariot de manutention, du type permettant de lever et supporter au moins une roue d'un véhicule.

Dans la suite de la description, on considère le cas où le véhicule à déplacer est une automobile. Il est clair cependant que la présente invention s'applique à tout type de véhicule à déplacer, dès lors qu'il est monté sur roues.

Il est connu, afin de déplacer une automobile, d'utiliser un ou plusieurs chariots de manutention. Généralement, on glisse un chariot sous chacune des roues avant (ou arrière), de façon à faire pivoter sans effort l'automobile autour de son essieu arrière (ou avant). On peut même glisser un chariot sous chacune des quatre roues, de façon à déplacer (toujours sans effort) l'automobile en rotation complète sur elle-même, sans l'aide d'un véhicule de dépannage.

On connaît, dans l'état de la technique, une structure de chariot de manutention comprenant deux ensembles de support, montés sur roulettes, et des moyens de déplacement des deux ensembles de support l'un par rapport à l'autre. Chacun des ensembles de support comprend un élément télescopique, coopérant avec l'élément télescopique de l'autre ensemble de support, et un élément de traverse, fixé (généralement sensiblement perpendiculairement) sur une extrémité libre de l'élément télescopique, et supportant au moins un rouleau. Un chariot possédant une telle structure peut prendre notamment une position de repos et une position de levage. Dans la position de repos, les deux éléments télescopiques sont écartés l'un de l'autre, de façon que le chariot puisse être placé sous la roue à lever, avec les rouleaux positionnés de part et d'autre de la roue. Dans la position de levage, les deux éléments télescopiques sont rapprochés l'un de l'autre, de façon que la roue soit levée et supportée par les rouleaux.

Un premier chariot de manutention connu, possédant la structure précitée, est décrit dans la demande de brevet française n° FR 97 14877, au nom de M. TORTELLIER. On se reportera notamment à la figure 15 de cette demande de brevet. Dans ce cas, chaque élément de traverse comprend un corps principal présentant un pli définissant une partie plane et une partie inclinée. Le corps principal est fixé, par une des extrémités de sa partie plane, à l'extrémité libre de l'un des éléments télescopiques. Une roulette pivotante est montée sous chacune des deux extrémités de la partie plane. Deux pattes de support s'étendent à partir des deux extrémités de la partie inclinée, de façon à supporter un axe (sensiblement perpendiculaire aux éléments télescopiques) autour duquel est monté en rotation au moins un rouleau. Par ailleurs, les moyens de déplacement, des deux ensembles de support l'un par rapport à l'autre, comprennent un tendeur à cliquet agissant sur une sangle, dont une extrémité est fixée à un élément de support (ou axe) lui-même directement fixé à un des deux éléments télescopiques.

Un second chariot de manutention connu, possédant la structure précitée, est décrit dans la demande de brevet européenne n° EP 317 044 au nom de M. COCCARO, qui sert de base pour la présentation en deux parties de la revendication 1. On se reportera notamment à la figure 2 de cette demande de brevet. Dans ce cas, chaque élément de traverse comprend une section centrale linéaire présentant deux extrémités à partir de chacune desquelles s'étend une section d'extrémité en échelon. Une roulette pivotante est montée sous chaque section d'extrémité en échelon. La section centrale linéaire, comme les sections d'extrémité en échelon, sont des portions de fer plat. L'une (dite première) des sections d'extrémité en échelon est soudée sur le dessus de l'extrémité libre de l'un des deux éléments télescopiques. L'autre (dite seconde) section d'extrémité en échelon est fixée de façon amovible à l'une des extrémités de la section centrale linéaire, par l'intermédiaire d'un élément de couplage. Un rouleau est monté en rotation autour de la section centrale linéaire, grâce à deux bagues de rotation fixée aux deux extrémités de cette section centrale linéaire. Par ailleurs, les moyens de déplacement, des deux ensembles de support l'un par rapport à l'autre, comprennent une crémaillère bidirectionnelle, commandée par pédale.

On connaît une variante du second chariot connu, dans laquelle un même fer plat constitue la section centrale linéaire et la seconde section d'extrémité. On n'utilise donc pas d'élément de couplage.

Il apparaît qu'aucun des deux chariots connus décrits ci-dessus n'offre une solution satisfaisante pour les éléments de traverse, et notamment pour le montage des rouleaux sur ces derniers. On rappelle que ce montage a lieu d'une part lors de l'assemblage initial du chariot, et d'autre part à chaque changement de rouleaux usés.

Les éléments de traverse compris dans le premier chariot connu sont relativement complexes, et donc assez difficiles à fabriquer et à monter. En effet, on rappelle que chaque élément de traverse comprend un corps principal (avec sa partie plane et sa partie inclinée), ainsi que deux pattes de support d'un axe sur lequel un rouleau est monté en rotation.

Les éléments de traverse compris dans le second chariot connu sont plus simples. En effet, les rouleaux sont montés en rotation directement autour des sections centrales linéaires. Toutefois, avec ces éléments de traverse, le montage des rouleaux n'est pas aisé car il nécessite le démontage préalable d'une des deux sections d'extrémité en échelon (à savoir celle qui n'est pas solidaire de l'un des éléments télescopiques). On rappelle que la section d'extrémité en échelon à démonter est fixée de façon amovible à l'une des extrémités de la section centrale linéaire, par l'intermédiaire d'un élément de couplage.

On notera que dans le cas de la variante précitée du second chariot, le montage des rouleaux est également difficile puisqu'il nécessite le démontage de la roulette supportée par la seconde section d'extrémité. En effet, ceci est impératif pour extraire le rouleau, par coulissement sur le volume du fer plat.

Le montage des rouleaux nécessite également la mise en place de deux bagues de rotation, aux deux extrémités de chaque section centrale linéaire.

En outre, la rotation de chaque rouleau sur deux bagues de rotation provoque une usure rapide de la paroi interne du rouleau, et surtout des deux bagues, et donc aboutit à des changements plus fréquents de ces éléments.

Par ailleurs, le fait que l'une des sections d'extrémité en échelon est soudée sur le dessus de l'extrémité libre de l'un des deux éléments télescopiques, induit que cet élément télescopique est proche du sol, en fonctionnement. En effet, le rouleau monté sur l'élément de traverse concerné doit être aussi proche que possible du sol. Or, une trop grande proximité des éléments télescopiques avec le sol peut parfois être gênante.

Enfin, dans les premier et second chariots connus, les éléments de traverses sont soudés aux éléments télescopiques. Le chariot présente donc une forme générale en "U", qui ne facilite pas son stockage, ni son transport.

L'invention a notamment pour objectif de pallier ces différents inconvénients de l'état de la technique.

Plus précisément, l'un des objectifs de la présente invention est de fournir un chariot de manutention, possédant la structure précitée, mais ne présentant pas les inconvénients des éléments de traverse des premier et second chariots connus décrits ci-dessus.

L'invention a également pour objectif de fournir un tel chariot de manutention dont les éléments de traverse sont peu complexes, simples à fabriquer et à monter, et peu coûteux.

Un autre objectif de l'invention est de fournir un tel chariot de manutention permettant un montage/démontage aisé des rouleaux.

Un autre objectif de l'invention est de fournir un tel chariot de manutention dont les éléments de traverse présentent une bonne résistance aux efforts.

Encore un autre objectif de l'invention est de fournir un tel chariot de manutention pouvant être stocké et transporté sous une forme compacte.

Un objectif complémentaire de l'invention est de fournir un tel chariot de manutention permettant de limiter l'usure des rouleaux.

Ces différents objectifs, ainsi que d'autres qui apparaîtront par la suite, sont atteints selon l'invention à l'aide d'un chariot de manutention, du type permettant de lever et supporter au moins une roue d'un véhicule, ledit chariot comprenant deux ensembles de support, montés sur roulettes, et des moyens de déplacement des deux ensembles de support l'un par rapport à l'autre, ledit chariot pouvant prendre notamment une position de repos et une position de levage, chacun desdits ensembles de support comprenant un élément télescopique, coopérant avec l'élément télescopique de l'autre ensemble de support, et un élément de traverse, fixé sensiblement perpendiculairement sur une extrémité libre dudit élément télescopique, et supportant au moins un rouleau. Selon la présente invention, chacun desdits éléments de traverse comprend une section centrale linéaire présentant une première extrémité libre et une seconde extrémité à partir de laquelle s'étend une section d'extrémité en échelon, au moins une roulette étant montée sous ladite section d'extrémité en échelon, au moins un rouleau pouvant être monté en rotation autour de ladite section centrale linéaire. En outre, chacun desdits éléments de traverse est fixé à l'extrémité libre de l'un des éléments télescopiques par ladite première extrémité libre de ladite section linéaire centrale. Au moins une roulette est montée sous l'extrémité libre de chacun des éléments télescopiques.

Le principe général de l'invention consiste donc à simplifier la structure des éléments de traverse (montage direct des rouleaux sur les sections centrales linéaires, mais avec une seule section d'extrémité en échelon pour chaque élément de traverse) et à fixer certaines roulettes directement sur les éléments télescopiques.

De façon avantageuse, pour chacun desdits éléments de traverse, ladite section d'extrémité en échelon est fixée avec des moyens de fixation non amovible à la seconde extrémité de ladite section linéaire centrale.

Ainsi, la structure de l'élément de traverse ne comprend aucun élément de couplage (contrairement au cas du second chariot connu).

Chacun desdits éléments de traverse est fixé avec des moyens de fixation amovible à l'extrémité libre de l'un des éléments télescopiques, par la première extrémité de ladite section linéaire centrale.

De cette façon, l'opération de montage/démontage des rouleaux est simple et rapide. En outre, le chariot selon l'invention peut être stocké et transporté aisément, sous une forme compacte (éléments de traverse démontés, et par exemple rangés parallèlement aux éléments télescopiques).

Préférentiellement, lesdits moyens de fixation amovible comprennent un fourreau et un élément de verrouillage associé. Les fourreaux offrent l'avantage de présenter une bonne résistance aux efforts, tout en étant simples de conception et d'utilisation (notamment lors du montage/démontage des rouleaux).

Préférentiellement, lesdits moyens de fixation amovible sont situés sous l'extrémité libre de l'un des éléments télescopiques. Ainsi, en fonctionnement, les éléments télescopiques du chariot selon l'invention peuvent être plus éloignés du sol que ceux du second chariot connu. Les rouleaux du chariot selon l'invention restent en revanche aussi proches du sol que ceux du second chariot connu.

De façon préférentielle, ladite section centrale linéaire de chacun desdits éléments de traverse est une portion de barre sensiblement cylindrique. Ainsi, on évite l'utilisation de bagues de rotation, et on limite l'usure de la paroi interne des rouleaux (grâce à une rotation sur un axe de forme adaptée).

Dans un mode de réalisation particulier de l'invention, lesdits moyens de déplacement des deux ensembles de support l'un par rapport à l'autre comprennent une sangle de levage et des moyens d'action sur ladite sangle de levage, de façon à induire le passage dudit chariot de la position de repos à la position de levage. Lesdits moyens d'action sur la sangle de levage sont fixés sur l'un desdits éléments télescopiques. Ladite sangle de levage présente une première extrémité fixée auxdits moyens d'action sur la sangle de levage, et une seconde extrémité fixée sur un élément de support d'extrémité, solidaire de l'un desdits éléments de traverse.

En d'autres termes, l'élément de support d'extrémité n'est pas fixé directement sur l'un des éléments télescopiques, mais est solidaire de l'un des éléments de traverse. Il y a donc synergie avec le concept général de l'invention qui prévoit que l'une des extrémités des éléments de traverse ne comporte pas de section d'extrémité en échelon, et donc ne supporte pas de roulette.

Selon une première variante avantageuse, ledit élément de support d'extrémité est solidaire de celui desdits éléments de traverse qui n'est pas fixé à l'élément télescopique auquel sont fixés lesdits moyens d'action sur la sangle de levage.

Il s'agit donc d'une tension directe de la sangle. Cette première variante s'applique notamment à la réalisation d'un chariot à levage rapide d'une charge limitée.

Selon une seconde variante avantageuse, ledit élément de support d'extrémité est solidaire de celui desdits éléments de traverse qui est fixé à l'élément télescopique auquel sont fixés lesdits moyens d'action sur la sangle de levage. En outre, ladite sangle présente un mouflage passant par un élément de support intermédiaire, solidaire de celui desdits éléments de traverse qui n'est pas fixé à l'élément télescopique auquel sont fixés lesdits moyens d'action sur la sangle de levage.

La tension de la sangle est donc ici indirecte, par mouflage, ce qui permet de diviser l'effort par deux. Cette seconde variante s'applique notamment à la réalisation d'un chariot à levage plus lent mais d'une charge plus importante.

Préférentiellement, ledit élément de support d'extrémité et/ou ledit élément de support intermédiaire appartien(nen)t au groupe comprenant :
- l'extrémité libre de la section centrale linéaire de l'un desdits éléments de traverse;
- une pièce de support, fixée sur au moins une patte comprise dans des moyens de fixation de l'un desdits éléments de traverse avec l'extrémité libre de l'un desdits éléments télescopiques.

Il est clair que l'élément de support intermédiaire n'est présent que dans la seconde variante (mouflage). On notera par ailleurs que dans le cas de cette seconde variante, l'élément de support d'extrémité et l'élément de support intermédiaire (situés chacun dans un des deux ensembles de support) ne sont pas nécessairement du même type. En d'autres termes, l'un peut être une extrémité libre de section centrale linéaire, tandis que l'autre peut être une pièce de support.

De façon préférentielle, lesdits moyens d'action sur ladite sangle de levage comprennent un tendeur à cliquet. Il est important de noter que le tendeur à cliquet est utilisé non seulement pour tendre la sangle de levage, mais aussi pour lever la roue.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- les figures 1 à 4 présentent chacune une vue d'un premier mode de réalisation du chariot de manutention selon la présente invention, respectivement en perspective éclatée (fig. 1), en perspective assemblée (fig.2), de dessus (fig.3) et de face (fig.4) ;
- les figures 5 à 7 présentent chacune une vue d'un second mode de réalisation du chariot de manutention selon la présente invention, respectivement en perspective assemblée (fig.5), de dessus (fig.6) et de face (fig.7).

L'invention concerne donc un chariot de manutention, du type permettant de lever et supporter au moins une roue d'un véhicule.

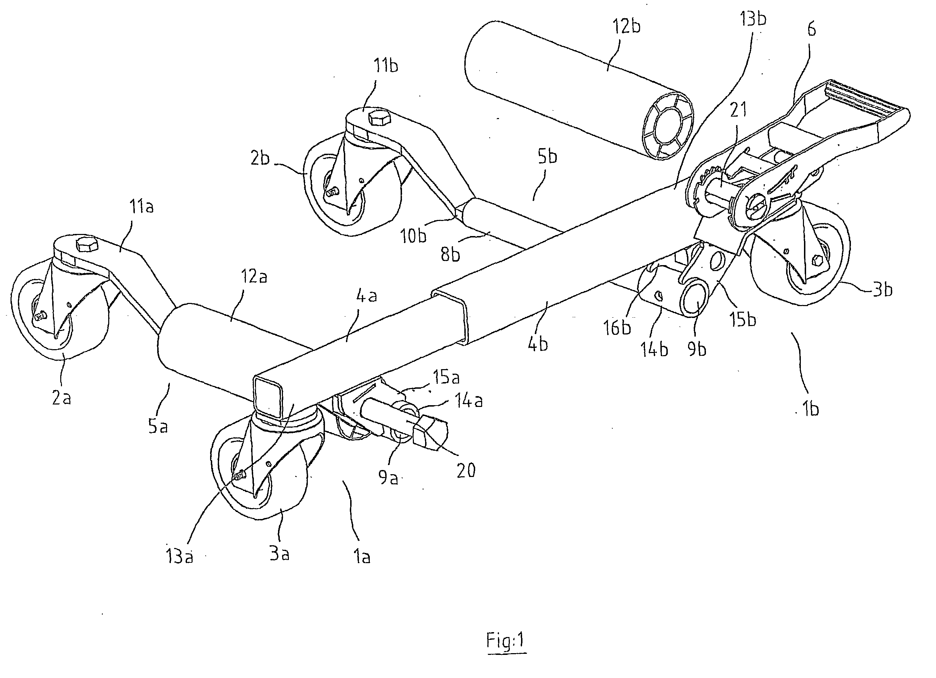

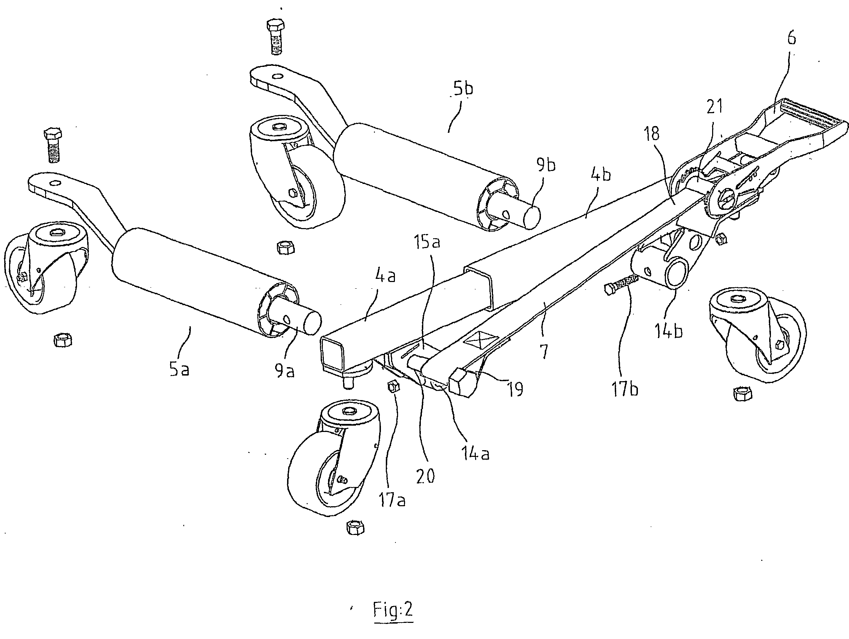

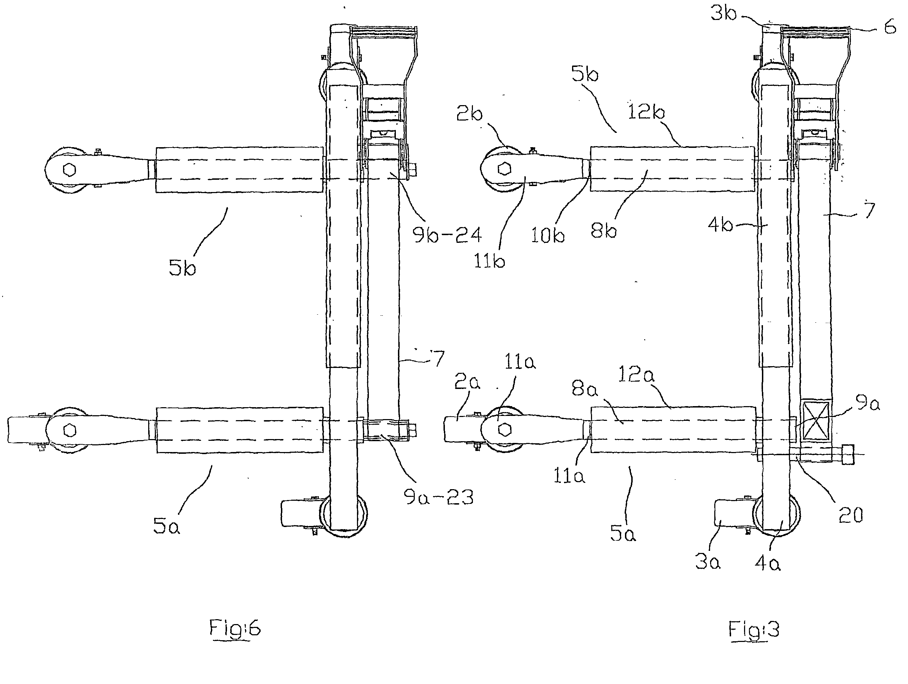

On présente maintenant, en relation avec les figures 1 à 4, un premier mode de réalisation du chariot selon l'invention.

Le chariot de manutention comprend deux ensembles de support 1a, 1b, montés sur roulettes pivotantes 2a, 3a, 2b, 3b. Un tendeur à cliquet 6 et une sangle 7 permettent le déplacement des deux ensembles de support l'un par rapport à l'autre (cf. explication détaillée ci-dessous).

Chacun des ensembles de support 1a, 1b comprend un élément télescopique 4a, 4b, (s'emboîtant avec l'élément télescopique de l'autre ensemble de support), et un élément de traverse 5a, 5b fixé sur une extrémité libre de l'élément télescopique (perpendiculairement à ce dernier).

Chacun des éléments de traverse 5a, 5b comprend une section centrale linéaire 8a, 8b présentant une première extrémité libre 9a, 9b et une seconde extrémité 10a, 10b à laquelle est fixée de façon non amovible (par exemple par soudure) une section d'extrémité en échelon 11a, 11b. Chacun des éléments de traverse 5a, 5b est fixé de façon amovible à l'extrémité libre 13a, 13b de l'un des éléments télescopiques 4a, 4b, par la première extrémité libre 9a, 9b de la section linéaire centrale 8a, 8b. Cette fixation amovible se fait par exemple par blocage (à l'aide d'éléments de verrouillage tels que des boulons 17a, 17b, des goupilles, ...) de la première extrémité libre 9a, 9b de la section linéaire centrale 8a, 8b dans un fourreau cylindrique 14a, 14b solidaire (via deux pattes 15a, 16a, 15b, 16b) de l'élément télescopique concerné 4a, 4b, et situé sous ce dernier.

Un rouleau 12a, 12b est monté en rotation autour de la section centrale linéaire 8a, 8b, cette dernière étant une portion de barre cylindrique (ou axe). Sur la figure 1, le rouleau de gauche 12a est illustré monté, tandis que le rouleau de droite 12b est illustré démonté.

Les moyens de fixation amovible précités 14a, 17a, 14b, 17b permettent donc de monter et démonter aisément les rouleaux.

Une roulette 2a, 2b est montée sous la partie plane de chaque section d'extrémité en échelon11a, 11b. Une roulette 3a, 3b est montée sous l'extrémité libre 13a, 13b de chacun des éléments télescopiques 4a, 4b.

Le tendeur à cliquet 6 est fixé sur l'un des éléments télescopiques 4b. La sangle 7 présente une première extrémité 18 fixée au tendeur à cliquet 6, et une seconde extrémité 19 fixée sur un élément de support d'extrémité 20. Ce dernier 20 est solidaire, via une patte 15a (cf. ci-dessous), de l'élément de traverse 5a "de gauche" (c'est-à-dire celui qui n'est pas fixé à l'élément télescopique 4b auquel est fixé le tendeur à cliquet 6).

Dans l'exemple illustré, l'élément de support d'extrémité 20 est un axe (ou "pièce de support", telle qu'un boulon) fixé sur une des pattes 15a permettant elle-même de fixer l'un des fourreaux cylindriques 14a sous l'extrémité libre 13a de l'un des éléments télescopiques 4a.

Selon une variante (non illustrée), l'élément de support d'extrémité 20 peut être l'extrémité libre 9a de la section centrale linéaire 8a de l'éléments de traverse 5a "de gauche".

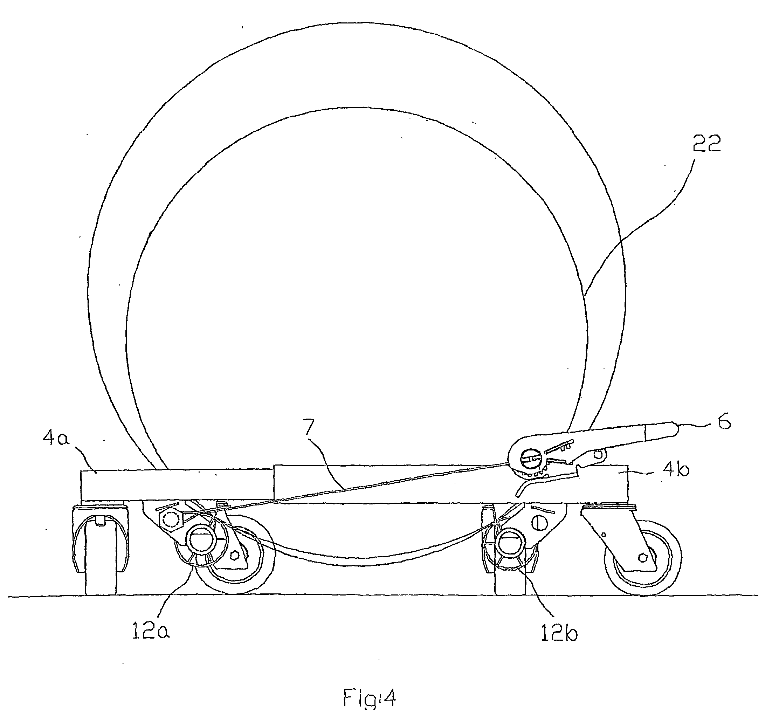

On rappelle maintenant brièvement le fonctionnement d'un tel chariot. Le chariot est d'abord placé dans une position de repos, de façon à pouvoir être positionné sous la roue à lever, avec les rouleaux touchant le sol et positionnés de part et d'autre de la roue. Ensuite, en manoeuvrant le tendeur à cliquet 6, l'opérateur tend la sangle de levage 7, de façon à rapprocher les deux éléments télescopiques 4a, 4b (qui s'emboîtent l'un dans l'autre), et ce jusqu'à ce que les rouleaux 12a, 12b soient en contact avec la roue, de part et d'autre de celle-ci. Le chariot arrive alors en position intermédiaire. Enfin, toujours en manoeuvrant le tendeur à cliquet 6, l'opérateur réduit la longueur de sangle de levage 7 entre l'élément de support d'extrémité 20 et le tendeur à cliquet 6. En fait, lorsque l'opérateur actionne la poignée du tendeur à cliquet, la sangle de levage 7 s'enroule autour de l'axe formant mandrin 21. Ceci provoque un rapprochement (toujours par emboîtement) encore plus grand des deux éléments télescopiques 4a, 4b et donc le rapprochement horizontal des rouleaux. On notera que le levage se fait avec une friction minimale du fait de la rotation des deux rouleaux sur les barres cylindriques 8a, 8b. Le chariot arrive alors en position de levage (cf. figure 4), dans laquelle la roue 22 est levée et supportée par les rouleaux 12a, 12b.

Inversement, pour dégager une roue portée par le chariot en position de levage, il suffit d'ouvrir totalement le tendeur à cliquet 6 (avec le système de débrayage manuel dont il est pourvu, de façon classique). La sangle 7 se déroule alors par l'intermédiaire du mandrin 21, autorisant les deux éléments de support 1a, 1b (et donc les rouleaux 12a, 12b) à s'écarter pour permettre à la roue de descendre au sol.

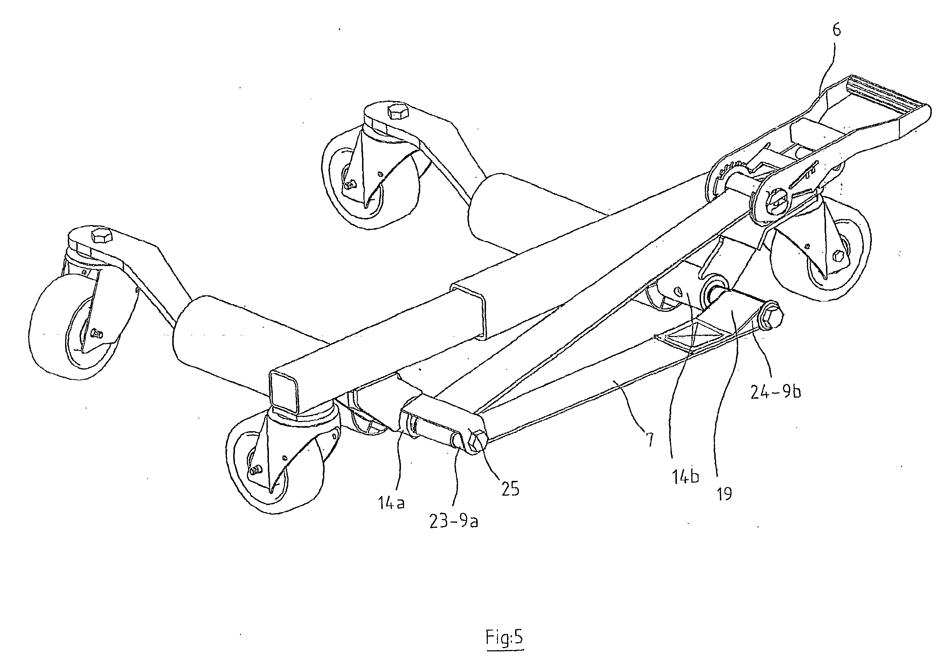

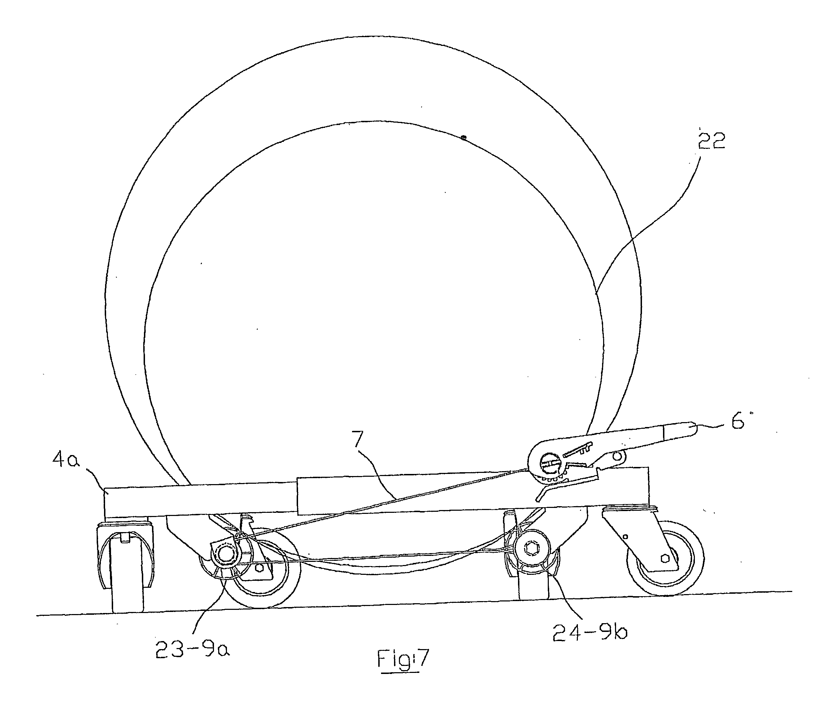

On présente maintenant, en relation avec les figures 5 à 7, un second mode de réalisation du chariot selon l'invention. Dans la suite de la description, on conserve les mêmes références numériques que celles utilisées ci-dessus pour tous les éléments communs aux premier et second modes de réalisation.

Le second mode de réalisation se distingue du premier présenté ci-dessus essentiellement en ce que la tension de la sangle 7 n'est pas faite de façon directe, mais de façon indirecte. En effet, on effectue un mouflage de la sangle consistant à faire passer la sangle autour d'un élément de support intermédiaire 23, et à fixer la seconde extrémité 19 de la sangle sur un élément de support d'extrémité 24. L'élément de support intermédiaire 23 coopère éventuellement d'une part avec une bague de rotation (non illustrée), évitant le frottement de la sangle sur l'élément de support intermédiaire 23, et d'autre part avec un étrier 25 de retenue de la sangle. L'élément de support intermédiaire 23 est solidaire de l'élément de traverse 5a "de gauche" (c'est-à-dire celui qui n'est pas fixé à l'élément télescopique 4b auquel est fixé le tendeur à cliquet 6), tandis que l'élément de support d'extrémité 24 est solidaire de l'élément de traverse 5b "de droite" (c'est-à-dire celui qui est fixé à l'élément télescopique 4b auquel est fixé le tendeur à cliquet 6).

Dans l'exemple illustré, l'élément de support intermédiaire 23 et l'élément de support d'extrémité 24 sont les extrémités libres 9a, 9b des sections centrales linéaires 8a, 8b des éléments de traverse 5a "de gauche" et 5b "de droite" respectivement.

Selon une variante (non illustrée), ces deux éléments de support 23, 24 peuvent être des axes (ou "pièces de support", telles que des boulons) fixés chacun sur une des pattes 15a, 15b permettant elle-même de fixer l'un des fourreaux cylindriques 14a, 14b sous l'extrémité libre 13a, 13b de l'un des éléments télescopiques 4a, 4b.

On peut également prévoir une variante "hybride", dans laquelle l'un des deux éléments de support 23 ou 24 est d'un certain type (par exemple, une pièce de support), et l'autre élément de support 24 ou 23 est d'un autre type (par exemple, une extrémité libre d'une section centrale linéaire).

## Revendications

1. Chariot de manutention, du type permettant de lever et supporter au moins une roue d'un véhicule, ledit chariot comprenant deux ensembles de support (1a, 1b) montés sur roulettes (2a, 3a, 2b, 3b), et des moyens de déplacement des deux ensembles de support l'un par rapport à l'autre, ledit chariot pouvant prendre notamment une position de repos et une position de levage, chacun desdits ensembles de support comprenant un élément télescopique (4a, 4b), coopérant avec l'élément télescopique de l'autre ensemble de support, et un élément de traverse (5a, 5b), fixé sensiblement perpendiculairement sur une extrémité libre dudit élément télescopique, et supportant au moins un rouleau,
chacun desdits éléments de traverse comprenant une section centrale linéaire (8a, 8b) présentant une première extrémité et une seconde extrémité à partir de laquelle s'étend une section d'extrémité en échelon (11a, 11b), au moins une roulette étant montée sous ladite section d'extrémité en échelon, au moins un rouleau (12a, 12b) pouvant être monté en rotation autour de ladite section centrale linéaire,
chacun desdits éléments de traverse étant fixé à l'extremité libre de l'un des éléments télescopiques par ladite première extrémité de ladite section linéaire centrale, **caractérisé en ce que** ladite première extrémité de ladite section liréaire est libre,
**en ce qu'**au moins une roulette est montée sous l'extrémité libre de chacun des éléments télescopiques, et **en ce que** chacun desdits éléments de traverse est fixé avec des moyens de fixation amovible (14a, 17a, 14b, 17b) à l'extrémité libre de l'un des éléments télescopiques, par la première extrémité de ladite section linéaire centrale.

2. Chariot selon la revendication 1, **caractérisé en ce que**, pour chacun desdits éléments de traverse, ladite section d'extrémité en échelon est fixée avec des moyens de fixation non amovible à la seconde extrémité de ladite section linéaire centrale.

3. Chariot selon la revendication 2, **caractérisé en ce que** lesdits moyens de fixation amovible comprennent un fourreau (14a, 14b) et un élément de verrouillage associé (17a, 17b).

4. Chariot selon l'une quelconque des revendications 2 et 3, **caractérisé en ce que** lesdits moyens de fixation amovible sont situés sous l'extrémité libre de l'un des éléments télescopiques.

5. Chariot selon l'une quelconque des revendications 1 à 4, **caractérisé en ce que** ladite section centrale linéaire (8a, 8b) de chacun desdits éléments de traverse est une portion de barre sensiblement cylindrique.

6. Chariot selon l'une quelconque des revendications 1 à 5, **caractérisé en ce que** lesdits moyens de déplacement des deux ensembles de support l'un par rapport à l'autre comprennent une sangle de levage (7) et des moyens (6) d'action sur ladite sangle de levage, de façon à induire le passage dudit chariot de la position de repos à la position de levage,
**en ce que** lesdits moyens d'action sur la sangle de levage sont fixés sur l'un desdits éléments télescopiques (4b),
et **en ce que** ladite sangle de levage présente une première extrémité (18) fixée auxdits moyens d'action sur la sangle de levage, et une seconde extrémité (19) fixée sur un élément de support d'extrémité (20 ; 24), solidaire de l'un desdits éléments de traverse.

7. Chariot selon la revendication 6, **caractérisé en ce que** ledit élément de support d'extrémité (20) est solidaire de celui desdits éléments de traverse qui n'est pas fixé à l'élément télescopique auquel sont fixés lesdits moyens d'action sur la sangle de levage.

8. Chariot selon la revendication 6, **caractérisé en ce que** ledit élément de support d'extrémité (24) est solidaire de celui desdits éléments de traverse qui est fixé à l'élément télescopique auquel sont fixés lesdits moyens d'action sur la sangle de levage, et **en ce que** ladite sangle présente un mouflage passant par un élément de support intermédiaire (23), solidaire de celui desdits éléments de traverse qui n'est pas fixé à l'élément télescopique auquel sont fixés lesdits moyens d'action sur la sangle de levage.

9. Chariot selon l'une quelconque des revendications 6 à 8, **caractérisé en ce que** ledit élément de support d'extrémité et/ou ledit élément de support intermédiaire appartien(nen)t au groupe comprenant :
- l'extrémité libre de la section centrale linéaire de l'un desdits éléments de traverse;
- une pièce de support, fixée sur au moins une patte comprise dans des moyens de fixation de l'un desdits éléments de traverse avec l'extrémité libre de l'un desdits éléments télescopiques.

10. Chariot selon l'une quelconque des revendications 6 à 9, **caractérisé en ce que** lesdits moyens d'action sur ladite sangle de levage comprennent un tendeur à cliquet (6).

## Patentansprüche

1. Handhabungswagen zum Anheben und Tragen von mindestens einem Rad eines Fahrzeugs, wobei der Wagen zwei auf Rollen (2a, 3a, 2b, 3b) montierte Tragevorrichtungen (1a, 1b) sowie Mittel zum Verschieben der zwei Tragevorrichtungen gegeneinander aufweist und wobei der Wagen insbesondere eine Ruhestellung und eine Hebestellung einnehmen kann, wobei jede der Tragevorrichtungen über ein Teleskopelement (4a, 4b) verfügt, das jeweils mit dem Teleskopelement der anderen Tragevorrichtung zusammenwirkt sowie über ein Querelement (5a, 5b), das in etwa rechtwinklig an einem freien Ende des Teleskopelementes befestigt ist und mindestens eine Rolle trägt,
wobei jedes Querelement einen geraden mittleren Abschnitt (8a, 8b) aufweist, der jeweils ein erstes Ende und ein zweites Ende aufweist, ab welchem sich ein abgestufter Endabschnitt (11a, 11b) erstreckt, wobei unter jedem dieser abgestuften Endabschnitte mindestens eine Rolle angebracht ist und wobei eine Rolle (12a, 12b) drehbar um den geraden mittleren Abschnitt angebracht werden kann,
wobei jedes Querelement an das freie Ende eines der Teleskopelemente über das erste Ende des geraden mittleren Abschnittes befestigt ist,
**dadurch gekennzeichnet, dass** das erste Ende des geraden mittleren Abschnittes frei ist, dass unter dem freien Ende eines jeden der Teleskopelemente mindestens eine Rolle angebracht ist und dass jedes der Querelemente mittels abnehmbarer Befestigungsmittel (14a, 17a, 14b, 17b) an das freie Ende eines der Teleskopelemente über das erste freie Ende des geraden mittleren Abschnittes befestigt ist.

2. Wagen nach Anspruch 1, **dadurch gekennzeichnet, dass** für jedes Querelement das abgestufte Ende mit Hilfe von nicht entfernbaren Befestigungsmitteln an das zweite Ende des geraden mittleren Abschnittes befestigt ist.

3. Wagen nach Anspruch 2, **dadurch gekennzeichnet, dass** die entfernbaren Befestigungsmittel eine Manschette (14a, 14b) und ein jeweils zugeordnetes Verriegelungselement (17a, 17b) aufweisen.

4. Wagen nach einem der Ansprüche 2 oder 3, **dadurch gekennzeichnet, dass** die entfernbaren Befestigungsmittel unter dem freien Ende eines der Teleskopelemente untergebracht sind.

5. Wagen nach einem der Ansprüche 1 bis 4, **dadurch gekennzeichnet, dass** der gerade mittlere Abschnitt (8a, 8b) eines jeden der Querelemente ein in etwa zylindrischer Stangenabschnitt ist.

6. Wagen nach einem der Ansprüche 1 bis 5, **dadurch gekennzeichnet, dass** die Mittel zum Bewegen der zwei Tragevorrichtungen gegeneinander einen Heberiemen (7) sowie Mittel (6) zum Einwirken auf diesen Heberiemen aufweisen, um den Übergang des Wagens aus der Ruhestellung in die Hebestellung zu bewirken,
dass die Mittel zum Einwirken auf den Heberiemen an einem der Teleskopelemente (4b) befestigt sind und,
dass der Heberiemen ein erstes freies Ende (18) aufweist, das an die Mittel zum Einwirken auf die Heberiemen befestigt ist, sowie ein zweites Ende (19), welches an ein als Teil eines der Querelemente ausgebildetes Endstützelement (20; 24) befestigt ist.

7. Wagen nach Anspruch 6, **dadurch gekennzeichnet, dass** das Endstützelement (20) als Teil des Querelementes ausgebildet ist, welches nicht mit dem Teleskopelement verbunden ist, an welchem die Mittel zum Einwirken auf den Heberiemen befestigt sind.

8. Wagen nach Anspruch 6, **dadurch gekennzeichnet, dass** das Endstützelement (24) als Teil des Querelementes ausgebildet ist, welches mit dem Teleskopelement verbunden ist, an welchem die Mittel zum Einwirken auf den Heberiemen befestigt sind und,
dass der Riemen eine Umkehrung aufweist, die über ein zwischenliegendes Stützelement (23) läuft, welches als Teil des Querelementes ausgebildet ist, das nicht mit dem Teleskopelement verbunden ist, an dem die Mittel zum Einwirken auf den Heberiemen befestigt sind.

9. Wagen nach einem der Ansprüche 6 bis 8, **dadurch gekennzeichnet, dass** das Endstützelement und/oder das zwischen liegende Stützelement der Gruppe angehört (angehören), die folgendes umfasst:
- das freie Ende des geraden mittleren Abschnitts eines der Querelemente;
- ein Stützteil, das mindestens an einer Lasche befestigt ist, welche zu den Befestigungsmitteln eines der Querelemente an das freie Ende eines der Teleskopelemente gehört.

10. Wagen nach einem der Ansprüche 6 bis 9, **dadurch gekennzeichnet, dass** die Mittel zum Einwirken auf den Heberiemen einen Ratschenspanner (6) umfassen.

## Claims

1. Materials handling dolly of the type enabling at least one vehicle wheel to be lifted and supported, the said dolly comprising two support assemblies (1a, 1b), mounted on castors (2a, 3a, 2b, 3b), and means of displacing the two support assemblies relative to one another, the said dolly being able to assume, in particular, an initial position and a lifting position, each of the said support assemblies comprising a telescopic element (4a, 4b) which operates together with the telescopic element of the other support assembly, and a cross-member (5a, 5b), attached substantially perpendicularly to a free end of the said telescopic element and bearing at least one cylinder,
each of the said cross-members comprising a linear central section (8a, 8b) having a first end and a second end, from which latter end extends a stepped end section (11a, 11b), at least one castor being mounted beneath the said stepped end section, at least one cylinder (12a, 12b) being capable of being mounted so as to be rotatable about the said linear central section,
each of the said cross-members being attached, at the said first end of the said central linear section, to the end of one of the telescopic elements, **characterized in that** the said first end of the said linear section is free,
**in that** at least one castor is mounted beneath the free end of each of the telescopic elements, and
**in that** each of the said cross-members is attached by means of removable fastening means (14a, 17a, 14b, 17b) to the free end of one of the telescopic elements, at the first end of the said central linear section.

2. Dolly according to claim 1, **characterized in that**, for each of the said cross-members, the said stepped end section is attached, by means of non-removable fastening means, to the second end of the said central linear section.

3. Dolly according to claim 2, **characterized in that** the said removable fastening means comprise a bush (14a, 14b) and an associated locking element (17a, 17b).

4. Dolly according to either of claims 2 or 3, **characterized in that** the said removable fastening means are located beneath the free end of one of the telescopic elements.

5. Dolly according to any one of claims 1 to 4, **characterized in that** the said linear central section (8a, 8b) of each of the said cross-members is a portion of substantially cylindrical rod.

6. Dolly according to any one of claims 1 to 5, **characterized in that** the said means of displacing the two support assemblies relative to one another comprise a lifting strap (7) and means (6) of acting on the said lifting strap so as to cause the said dolly to pass from the initial position to the lifting position,
**in that** the said means of acting on the lifting strap are attached to one of the said telescopic elements (4b),
and **in that** the said lifting strap has a first end (18) attached to the said means of acting on the lifting strap, and a second end (19) attached to an end support element (20; 24) which is integral with one of the said cross-members.

7. Dolly according to claim 6, **characterized in that** the said end support element (20) is integral with that of the said cross-members which is not attached to the telescopic element to which the said means of acting on the lifting strap are attached.

8. Dolly according to claim 6, **characterized in that** the said end support element (24) is integral with that of the said cross-members which is attached to the telescopic element to which the said means of acting on the lifting strap are attached,
and **in that** the said strap passes as over a pulley via an intermediate support element (23) which is integral with that of the said cross-members which is not attached to the telescopic element to which the said means of acting on the lifting strap are attached.

9. Dolly according to any one of claims 6 to 8, **characterized in that** the said end support element and/or the said intermediate support element belong(s) to the group comprising:
- the free end of the linear central section of one of the said cross-members;
- a support piece attached to at least one lug included in the means for attaching one of the said cross-members to the free end of one of the telescopic elements.

10. Dolly according to any one of claims 6 to 9, **characterized in that** the said means of acting on the said lifting strap comprise a tension-ratchet (6).
